# EUROPEAN PATENT APPLICATION

(11) **EP 4 632 742 A2**
(43) Date of publication of application: **15.10.2025**
(21) Application number: 25198952.1
(22) Date of filing: 29.08.2025
(51) Int. Cl.: G11B 27/031, G06N 3/0475, G06V 10/82, G10L 13/08, H04N 5/222, H04N 21/00

(54) **METHOD AND APPARATUS FOR GENERATING DIGITAL HUMAN VIDEO BASED ON LARGE MODEL, INTELLIGENT AGENT, ELECTRONIC DEVICE, AND STORAGE MEDIUM**

(30) Priority: 25.04.2025 CN 202510536606
(71) Applicant: Beijing Baidu Netcom Science Technology Co., Ltd., Beijing 100085 (CN)
(72) Inventor: WU,, Tian, Beijing, 100085 (CN); WANG,, Haifeng, Beijing, 100085 (CN); TIAN,, Hao, Beijing, 100085 (CN); WU,, Wenquan, Beijing, 100085 (CN); DAI,, Dai, Beijing, 100085 (CN); LIU,, Simei, Beijing, 100085 (CN); WANG,, Li, Beijing, 100085 (CN); ZHOU,, Hang, Beijing, 100085 (CN); GAO,, Cong, Beijing, 100085 (CN); XIE,, Qunyi, Beijing, 100085 (CN); HAO,, Qingchang, Beijing, 100085 (CN)
(74) Representative: Carpmaels & Ransford LLP

(57) **Abstract**

The present disclosure provides a method and apparatus for generating a digital human video based on a large model, an intelligent agent, an electronic device, and a storage medium, which relate to a field of artificial intelligence technologies, in particular to technical fields such as deep learning, large models, computer vision and so on, and may be applied to scenarios such as video livestreaming, advertisement production, and e-commerce sales. The method for generating a digital human video based on a large model includes: acquiring a requirement information, where the requirement information includes an action description information for describing a specified action video segment, and the action video segment represents a specified action of a target object; processing the requirement information using a first large model to obtain a target script, where the target script includes a target speech segment text matching the action description information; and processing the target script and the action video segment using a second large model to obtain a target video for displaying a target digital human performing a speech delivery based on the target speech segment text while performing the specified action.

## Description

### TECHNICAL FIELD

The present disclosure relates to a field of artificial intelligence technologies, in particular to technical fields such as deep learning, large models, computer vision and so on, and may be applied to scenarios such as video livestreaming, advertisement production, and e-commerce sales.

### BACKGROUND

With a rapid development of Internet technologies, users may conveniently browse videos and other resource information through smart terminal devices such as smartphones. For example, a user may browse livestream videos on a smartphone to learn detailed information about products.

### SUMMARY

The present disclosure provides a method and apparatus for generating a digital human video based on a large model, an intelligent agent, an electronic device, and a storage medium.

According to an aspect of the present disclosure, a method for generating a digital human video based on a large model is provided, including: acquiring a requirement information, where the requirement information includes an action description information for describing a specified action video segment, and the action video segment represents a specified action of a target object; processing the requirement information using a first large model to obtain a target script, where the target script includes a target speech segment text matching the action description information; and processing the target script and the action video segment using a second large model to obtain a target video for displaying a target digital human performing a speech delivery based on the target speech segment text while performing the specified action.

According to another aspect of the present disclosure, an apparatus for generating a digital human video based on a large model is provided, including: an acquisition module configured to acquire a requirement information, where the requirement information includes an action description information for describing a specified action video segment, and the action video segment represents a specified action of a target object; a target script obtaining module configured to process the requirement information using a first large model to obtain a target script, where the target script includes a target speech segment text matching the action description information; and a target video obtaining module configured to process the target script and the action video segment using a second large model to obtain a target video for displaying a target digital human performing a speech delivery based on the target speech segment text while performing the specified action.

According to another aspect of the present disclosure, an artificial intelligence agent is provided, including: an input module configured to receive an input information; a processing module configured to determine a target task based on the input information received by the input module, determine a first large model and a second large model based on the target task, and perform the method for generating a digital human video based on a large model provided in embodiments of the present disclosure by invoking the first large model and the second large model, so as to obtain an output information; and an output module configured to output the output information obtained by the processing module.

According to another aspect of the present disclosure, an electronic device is provided, including: at least one processor; and a memory communicatively connected to the at least one processor, where the memory stores instructions executable by the at least one processor, and the instructions are configured to, when executed by the at least one processor, cause the at least one processor to implement the method for generating a digital human video based on a large model provided in embodiments of the present disclosure.

According to another aspect of the present disclosure, a non-transitory computer-readable storage medium having computer instructions therein is provided, and the computer instructions are configured to cause a computer to implement the method for generating a digital human video based on a large model provided in embodiments of the present disclosure.

According to another aspect of the present disclosure, a computer program product containing a computer program is provided, the computer program when executed by a processor is configured to cause the processor to implement the method for generating a digital human video based on a large model provided in embodiments of the present disclosure.

It should be understood that the content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute any limitation to the present disclosure. In the accompanying drawings:
FIG. 1 schematically shows an exemplary system architecture to which a method and an apparatus for generating a digital human video based on a large model may be applied according to an embodiment of the present disclosure;
FIG. 2 schematically shows a flowchart of a method for generating a digital human video based on a large model according to an embodiment of the present disclosure;
FIG. 3 schematically shows a schematic diagram of determining an action video segment according to an embodiment of the present disclosure;
FIG. 4 schematically shows a schematic diagram of determining an action description information according to an embodiment of the present disclosure;
FIG. 5 schematically shows a schematic diagram of determining a target script according to an embodiment of the present disclosure;
FIG. 6 schematically shows a schematic diagram of generating a target video according to an embodiment of the present disclosure;
FIG. 7 schematically shows a schematic diagram of determining speech audio data according to an embodiment of the present disclosure;
FIG. 8 schematically shows a flowchart of determining a dynamic video segment according to an embodiment of the present disclosure;
FIG. 9 schematically shows a schematic diagram of a method for generating a digital human video based on a large model according to an embodiment of the present disclosure;
FIG. 10 schematically shows a block diagram of an apparatus for generating a digital human video based on a large model according to an embodiment of the present disclosure;
FIG. 11 schematically shows a structural block diagram of an artificial intelligence agent according to an embodiment of the present disclosure; and
FIG. 12 shows a schematic block diagram of an example electronic device that may be used to implement the method for generating a digital human video based on a large model according to embodiments of the present disclosure.

### DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those ordinary skilled in the art should realize that various changes and modifications may be made to embodiments described herein without departing from the scope and spirit of the present disclosure. Likewise, for clarity and conciseness, descriptions of well-known functions and structures are omitted in the following description.

In the technical solutions of the present disclosure, the acquisition, storage, and application of user personal information all comply with relevant laws and regulations, take necessary confidentiality measures, and do not violate public order and good customs.

The inventors found that digital human videos generated in scenarios such as e-commerce live streaming and film production have problems such as insufficient expressiveness in actions, resulting in poor video quality and negatively affecting users' video viewing experience.

Embodiments of the present disclosure provide a method and apparatus for generating a digital human video based on a large model, an intelligent agent, an electronic device, a storage medium, and a computer program product. The method for generating a digital human video based on a large model includes: acquiring a requirement information, where the requirement information includes an action description information for describing a specified action video segment, and the action video segment represents a specified action of a target object; processing the requirement information using a first large model to obtain a target script, where the target script includes a target speech segment text matching the action description information; processing the target script and the action video segment using a second large model to obtain a target video for displaying a target digital human performing a speech delivery based on the target speech segment text while performing the specified action.

According to embodiments of the present disclosure, by processing the requirement information containing the action description information using the first large model, it is possible to generate a target speech segment text that matches the specified action represented by the action description information. Leveraging strong understanding and text generation capabilities of the first large model, semantics of the target speech segment text in the target script may be aligned with an action intent represented by the specified action. Furthermore, by processing the target script including the target speech segment text as well as the action video segment using the second large model to generate a target video, the target object in the target video may perform a speech delivery based on the target speech segment text matching the specified action while performing the specified action, so as to ensure consistency between the speech expression and the action expression of the target object in the target video, enhance the naturalness of the speech expression of the target object in the target video, improve the expressiveness of the target object, and thus improve the quality of the target video.

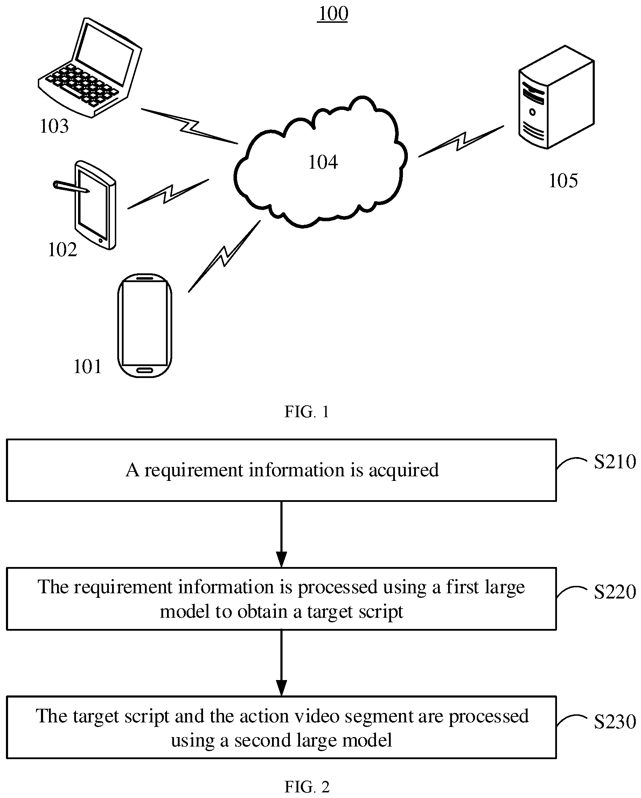

FIG. 1 schematically shows an exemplary system architecture to which the method and apparatus for generating a digital human video based on a large model may be applied according to an embodiment of the present disclosure.

It should be noted that FIG. 1 is merely an example of the system architecture to which embodiments of the present disclosure may be applied, so as to help those skilled in the art understand technical contents of the present disclosure. However, it does not mean that embodiments of the present disclosure may not be applied to other devices, systems, environments or scenarios. For example, in another embodiment, the exemplary system architecture to which the method and apparatus for generating a digital human video based on a large model may be applied may include a terminal device, but the terminal device may implement the method and apparatus for generating a digital human video based on a large model provided in embodiments of the present disclosure without interacting with a server.

As shown in FIG. 1, the system architecture 100 according to the embodiment may include terminal devices 101, 102, 103, a network 104, and a server 105. The network 104 is a medium for providing a communication link between the terminal devices 101, 102, 103 and the server 105. The network 104 may include various types of connections, such as wired and/or wireless communication links, and the like.

The terminal devices 101, 102, 103 may be used by a user to interact with the server 105 through the network 104 to receive or send messages, etc. The terminal devices 101, 102, 103 may be installed with various communication client applications, such as knowledge reading applications, web browser applications, search applications, instant messaging tools, email clients and/or social platform software, etc. (for example only).

The terminal devices 101, 102, 103 may be various electronic devices having display screens and supporting web browsing, including but not limited to smart phones, tablet computers, laptop computers, and desktop computers, etc.

The server 105 may be a server providing various services, such as a background management server (for example only) that provides support for content browsed by the user using the terminal devices 101, 102, 103. The background management server may analyze and process received data such as a user request, and feed back a processing result (such as a web page, information or data acquired or generated according to the user request) to the terminal devices.

The server 105 may be a cloud server, also known as a cloud computing server or a cloud host, which is a host product in a cloud computing service system to solve shortcomings of difficult management and weak service scalability in traditional physical hosts and VPS (Virtual Private Server) services. The server 105 may also be a server of a distributed system or a server combined with a block-chain.

It should be noted that the method for generating a digital human video based on a large model provided in embodiments of the present disclosure may generally be performed by the server 105. Accordingly, the apparatus for generating a digital human video based on a large model provided in embodiments of the present disclosure may generally be disposed in the server 105. The method for generating a digital human video based on a large model provided in embodiments of the present disclosure may also be performed by a server or a server cluster different from the server 105 and capable of communicating with the terminal devices 101, 102, 103 and/or the server 105. Accordingly, the apparatus for generating a digital human video based on a large model provided in embodiments of the present disclosure may also be disposed in a server or a server cluster different from the server 105 and capable of communicating with the terminal devices 101, 102, 103 and/or the server 105.

It should be understood that the numbers of terminal devices, networks, and servers shown in FIG. 1 are merely illustrative. According to implementation needs, any number of terminal devices, networks, and servers may be provided.

FIG. 2 schematically shows a flowchart of a method for generating a digital human video based on a large model according to an embodiment of the present disclosure.

As shown in FIG. 2, the method for generating a digital human video based on a large model includes operation S210 to operation S230.

In operation S210, a requirement information is acquired.

According to an embodiment of the present disclosure, the requirement information includes an action description information for describing a specified action video segment, and the action video segment represents a specified action of a target object. For example, the action video segment may represent the target object performing specified actions such as chopping vegetables or stir-frying. For another example, the action video segment may represent the target object performing specified actions such as rotating, unboxing, folding, tapping, or squeezing a product for display. The specific type of the specified action in the action video segment is not limited in embodiments of the present disclosure.

According to an embodiment of the present disclosure, the action description information is used to describe any action attributes of the specified action, such as action type, action position, action amplitude, and action rate. In addition, the action description information may also be used to describe products and props related to the specified action and other action-related objects. The specific type of information described in the action description information is not limited in embodiments of the present disclosure, as long as it is related to the specified action.

It should be understood that one or more target objects may be contained in the action video segment, and the action video segment may represent one or more specified actions of the target object. The number of target objects in the action video segment and the number of specified actions represented are not limited in embodiments of the present disclosure, as long as the action description information may clearly describe the number of specified actions and the relationship between the specified actions and the target objects.

It should be noted that the target object may be a real person but is not limited thereto. The target object may also be a virtual object such as a virtual digital human. The specific type of the target object is not limited in embodiments of the present disclosure.

In operation S220, the requirement information is processed using a first large model to obtain a target script.

According to an embodiment of the present disclosure, the target script includes a target speech segment text matching the action description information. The target speech segment text is considered to match the action description information if a text expression of the speech segment text is aligned with an action expression or action intent of the specified action represented by the action description information.

In an example, the action description information may represent a squeezing test action performed on a target product, and the target speech segment text may be understood as a speech content related to the squeezing test action that the target object needs to explain while performing the squeezing test action on the target product, such as product characteristics, deformation caused by squeezing, and recovery of product shape after deformation.

In some embodiments, the first large model may be a large language model. A Large Language Model (LLM) is an artificial intelligence model built based on deep learning technologies. A large language model typically has a vast number of parameters, which may reach billions or even hundreds of billions. The huge number of parameters allows the large language model to capture subtle features and complex patterns in language, enabling it to better understand requirement semantics of the requirement information and to accurately generate a target speech segment text aligned with the action description information based on the action description information. Consequently, the target script may contain a target speech segment text which may drive the target object to perform a speech delivery and which is aligned with the specified action, so as to prompt the alignment between the speech expression and the action expression of the target object in the target video based on the matched target speech segment text and action description information.

In operation S230, the target script and the action video segment are processed using a second large model to obtain a target video for displaying a target digital human performing a speech delivery based on the target speech segment text while performing the specified action.

In some embodiments, the second large model may be a vision large model.

According to an embodiment of the present disclosure, a Vision Large Model (VLM) may be an artificial intelligence model used to process or generate visual data such as images or videos. A vision large model typically contains billions or even hundreds of billions of parameters and may generally be used to process multimodal data such as text and images. A vision large model may have image or video generation capabilities. For example, a vision large model may generate video data matching the requirement intent by processing multimodal data such as text and images.

According to an embodiment of the present disclosure, the target digital human may be identical or similar to the target object. For example, the target digital human and the target object may represent the same real person. Alternatively, the target digital human may be a digital human obtained by modifying appearance information such as image, color, or clothing of the target object. For ease of explanation of the method for generating a digital human video based on a large model provided in embodiments of the present disclosure, both the target digital human and the target object are referred to as the "target object" in embodiments of the present disclosure. The target object in the target video or dynamic video segment involved in embodiments of the present disclosure may be understood as a target digital human, which will not be repeated in embodiments of the present disclosure.

According to embodiments of the present disclosure, by processing the target script and the action video segment using the vision large model, the vision large model may deeply understand a matching relationship between the target speech segment text in the target script and the action video segment, and further fully understand semantics of other script contents in the target script apart from the target speech segment text and the action-related information such as action attribute and action object of the specified action. Therefore, the generated target video may smoothly display the target object performing a speech delivery based on the target speech segment text in a suitable manner while performing the specified action, and the target object in the target video may naturally performing the matched specified action during the speech delivery to improve the expression effect and expressiveness, thereby improving the quality of the target video.

It should be noted that the target video determined according to the method for generating a digital human video based on a large model provided in embodiments of the present disclosure may be applied to live e-commerce scenarios. For example, the method for generating a digital human video based on a large model provided in embodiments of the present disclosure may be used to generate a marketing livestream video of a host. However, the present disclosure is not limited to this. The method for generating a digital human video based on a large model provided in embodiments of the present disclosure may also be applied to animation production, film and television production, metaverse scene construction, and any other application scenarios. The method for generating a digital human video based on a large model provided in embodiments of the present disclosure do not limit the specific application scenarios.

It should be noted that the acquisition of information involved in any embodiment of the present disclosure, including but not limited to action video segments, requirement information, and other information, is conducted with the authorization of relevant individuals or organizations. Moreover, the purpose of use has been disclosed prior to the acquisition, and necessary encryption or anonymization measures have been adopted for the acquired information, which complies with relevant laws and regulations and does not violate public order and good morals.

It should be noted that, for ease of explanation of the video generation method provided in the present disclosure, the first large model described in embodiments of the present disclosure is exemplified as a large language model, and the second large model described in embodiments of the present disclosure is exemplified as a vision large model. The large language model or vision large model described in embodiments of the present disclosure is not used to limit the model structure or type of the first large model or the second large model.

In an example, the action description information may be associated with the action video segment, and the associated action video segment may be determined based on the action description information in the requirement information. The vision large model may then process the target script and the action video segment associated with the action description information to obtain a target video.

According to an embodiment of the present disclosure, the requirement information may further include at least one of an object role attribute information of the target object, a target product information for the target video, or a target virtual prop information for the target video.

According to an embodiment of the present disclosure, the object role attribute information of the target object refers to information related to attributes of the target object, such as role type, role persona, role personality, speech rate and tone of the target object in the target video. By processing the requirement information including the object role attribute information using the large language model, the target script may be matched with the role type, role persona, and other object attributes of the target object, and the expression of the target speech segment text or other speech segment texts in the target script may be consistent with the object attributes of the target object, thereby improving the realism and naturalness of the expression of the target object in the target video to meet user needs. Furthermore, by processing the requirement information including the object role attribute information using the large language model, it is possible to generate a target video in which a plurality of target objects perform speech delivery, thereby increasing scenario diversity of the target video and meeting actual viewing needs of users.

According to an embodiment of the present disclosure, the target product information may refer to attribute information of products such as shoes and clothes that need to be displayed in the target video. The product information may include any type of product attributes such as color, size, specific mark, quantity, etc. of the product. The specific type of the product information is not limited in embodiments of the present disclosure.

According to an embodiment of the present disclosure, the target virtual prop information for the target video may refer to attribute information of any virtual prop elements such as lucky-bag original-price elements that need to appear in the target video. For example, the target virtual prop information may represent the type, size, color, display timing, etc. of the virtual prop elements. The specific type of the virtual prop elements represented by the target virtual prop information is not limited in embodiments of the present disclosure.

According to embodiments of the present disclosure, by processing at least one of the object attribute information, the target product information, or the target virtual prop information using the large language model, it is possible to effectively control the large language model to incorporate the action intent, action amplitude, and other action attributes of the specified action represented by the action description information, thereby generating script contents possessing richer expressiveness and matching the action attributes. As a result, the target object in the target video may exhibit richer expressiveness, the expression style is matched with the action intent of the specified action, and the diversity and expressive power of the target video may be improved.

In some embodiments, the requirement information may further include an object attribute information for modifying the skin tone, clothing, and other object attributes of the target object. The target digital human or target object in the target video may reflect an updated appearance according to the object attribute information of the requirement information.

In an embodiment, the requirement information may include an object attribute information, a target product information, and the action description information. The object attribute information may include role information, facial expression information, etc., and the target product information may include components, ingredients and other information of a product from Brand A. The target script obtained by processing the requirement information using the large language model may be represented by the following paragraphs enclosed by "//"

//Host: (Tone: calm) (Action: picks up two opened boxes from Brand A, puts down the one in the left hand, and points to the contents of the one in the right hand while explaining the usage method) "Look, the usage is very simple (Co-host says at the same time: "Very simple!"), use it once a month, continuously for six months, then take a break for six months, only two boxes are needed per year. Each time, mix agent A and agent B, then use the microneedle roller. It's painless and has a short recovery period. After application, avoid water contact within twelve hours and remember to protect your skin from the sun."

Host: (Tone: calm) (Action: picks up the packaged roller on the table to show, while the co-host gestures in front of the face to demonstrate the use of the roller) "This roller is a tool to be used together with the product. It helps the nutrients penetrate and absorb better. Just like loosening the soil so the nutrients of seeds can take root and sprout better, the skin can absorb the nutrients more effectively."

Co-host: (Tone: calm) (Action: brings in a toolkit from off-screen and opens it for display, while the host opens the roller package and takes out the roller to show) "Friends, everything in the toolkit has been prepared for you (Host says at the same time: "So thoughtful! "), you can start using it as soon as you receive it, very convenient. Also, our product is painless with a short recovery period, and won't interfere with your daily life."

Co-host: (Tone: enthusiastic) (Action: takes out a bottle of essence and a bottle of activator from the Brand A box and shows them side by side, then puts them back into the box) "Look, these two bottles are agent A and agent B. When combined, they produce powerful results. Just like two superheroes teaming up, they can defeat various skin problems and make your skin bright, tender, and smooth!"

Host: (Tone: enthusiastic) (Facial expression: happy) "Dear friends, with such a good product and so many benefits, what are you still waiting for? Opportunities like this are rare, and stock is limited. If you miss this time, it may be a long wait before you get such a discount again!"

Co-host: (Tone: enthusiastic) (Action: picks up a KT board showing before-and-after photos of Brand A usage and introduces the results) (Facial expression: surprised) "Friends, take a look at these comparison photos, the effect is really immediate!" (Host says at the same time: "This is amazing! Before using it, the skin had various problems. After using it, it's like the skin was renewed, becoming bright, tender, and glowing. Don't you also want skin like this?"//

In this embodiment, within the same paragraph, the content following "Host:" represents the target speech segment text for a host target object with a host role attribute, and the content "(Tone: calm)" may indicate that the tone attribute of the target object delivering the target speech segment text in the target video is calm. The content "(Action: picks up the packaged roller on the table to show, while the co-host gestures in front of the face to demonstrate the use of the roller)" may represent the respective action description information of the host target object and the co-host target object. The content "This roller is a tool to be used together with the product. It helps the nutrients penetrate and absorb better. Just like loosening the soil so the nutrients of seeds can take root and sprout better, the skin can absorb the nutrients more effectively." may represent the target speech segment text for the host target object. The content "(Co-host says at the same time: "Very simple!")" represents a supportive target speech segment text for the co-host. The content "(Facial expression: happy)" represents a facial expression attribute information of the host target object.

According to the target script provided in this embodiment, the vision large model may accurately capture the object attributes of a plurality of target objects with different role attributes as well as the semantics of the specified action that match the target speech segment text, by processing the target script and the action video segment. In the generated target video, a plurality of target objects may perform a speech delivery while performing the specified actions to show products following the arrangement logic, according to their respective role attribute requirements, thereby enhancing the expressiveness of the target video.

In an embodiment, the action description information may be determined based on the action video segment. For example, the action description information may be obtained by processing the action video segment using the vision large model.

In an embodiment, the action video segment is determined by: performing a position change detection on a key point of the target object in an initial video to obtain a position change detection result; determining an initial action video segment from the initial video based on the position change detection result; performing an action type detection on the initial action video segment to obtain an action type for the initial action video segment; and determining an initial action video segment matching a predetermined action type as the action video segment.

According to an embodiment of the present disclosure, the initial video may include video frames that record the target object performing one or more specified actions. A position change detection may be performed on key points of body parts such as hands, legs, and torso of the target object in the initial video, and a start time and an end time of the specified action may be accurately determined according to the position change detection result, then the initial action video segments corresponding to various action types may be accurately determined from the initial video.

According to an embodiment of the present disclosure, by performing an action type detection on the initial action video segment, the action video segment matching the predetermined action type may be determined from the initial action video segment, so that the action video segment representing the specified action with the predetermined action type may be accurately filtered. The initial video may be edited based on the start time, the end time and other action-related time information of the specified action to obtain the action video segment.

According to an embodiment of the present disclosure, the initial action video segment may be detected based on a target detection algorithm to obtain an initial action type. For example, the initial action video segment may be detected using a target detection model built based on a convolutional neural network algorithm. The specific method for determining the initial action type is not limited in embodiments of the present disclosure.

In an embodiment, the action type of the specified action may be a high-expressiveness action type. The specified action with the high-expressiveness action type may be an action that accurately expresses the emotion, role attribute, and other object attribute information of the target object. Alternatively, the specified action with the high-expressiveness action type may be an action that specifically demonstrates the performance, style, and appearance of the target product.

In an embodiment, the specified action may be a high-expressiveness action, which may be composed of actions of multiple body parts of the target object, such as hand actions and torso actions. The action video segment related to the high-expressiveness action may be determined from the initial video through the following steps 1.1 to 1.7.

In step 1.1, a key point detection is performed on a livestream video of a real person serving as the initial video, where the key points include torso posture key points and gesture key points in the livestream video of the real person.

In step 1.2, a body movement trajectory, a left-hand movement trajectory, and a right-hand movement trajectory of the target object are determined as the position change detection result according to key point positions in each video frame of the livestream video of the real person.

In step 1.3, an observation window with a 2-second duration is set, the movement trajectories are analyzed to determine a movement amplitude in the observation window, and when a position change amplitude of the key point between adjacent frames exceeds a predetermined threshold, a timestamp of either frame in the two adjacent frames is determined as an action start time of the initial action.

In step 1.4, the observation window is slid forward in 0.5-second increments, and the position change amplitude of the key point in the observation window is continuously detected. If the position change amplitude exceeds the predetermined threshold, step 1.4 is repeatedly performed until the livestream video of the real person ends or the position change amplitude falls below the predetermined threshold, then the timestamp of the video frame to which the observation window has currently slid to is considered as the end time of the specified action.

In step 1.5, step 1.3 and step 1.4 are repeatedly performed until the end of the video, thereby obtaining the start times and end times of a plurality of initial action video segments.

In step 1.6, the initial video is segmented according to the start times and end times of the initial action video segments to obtain a plurality of initial action video segments.

In step 1.7, the initial action type represented by each of the plurality of initial action video segments is identified using a target detection model such as a pose recognition model and a gesture recognition model, and the action video segment representing the specified action is determined from the plurality of initial action video segments according to the predetermined action type.

It should be noted that the acquisition of information involved in this embodiment, including but not limited to livestream videos of real persons, is conducted with authorization from relevant individuals or organizations. Moreover, the purpose of use has been disclosed prior to the acquisition, and necessary encryption or anonymization measures have been adopted for the acquired information, which complies with relevant laws and regulations and does not violate public order and good morals.

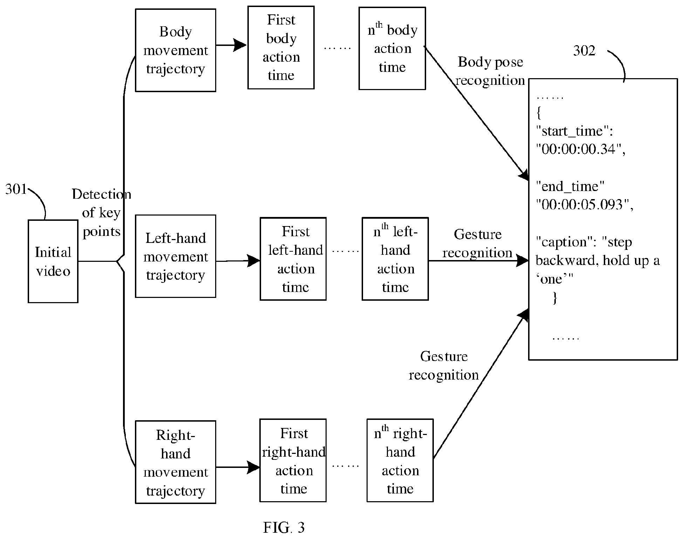

FIG. 3 schematically shows a schematic diagram of determining an action video segment according to an embodiment of the present disclosure.

As shown in FIG. 3, a position change detection is performed on the key points in the initial video 301 through the observation window, and the obtained position change detection result may include at least one of a left-hand movement trajectory, a right-hand movement trajectory, and a body movement trajectory. By detecting when the position change amplitude of the left-hand key point in the left-hand movement trajectory exceeds a predetermined amplitude threshold, a start time of a first left-hand action in the first left-hand action time is obtained. Detection continues from the start time of the first left-hand action until the position change amplitude of the left-hand key point falls to or below the predetermined amplitude threshold, thereby obtaining an end time of the first left-hand action in the first left-hand action time. The position change amplitude of the left-hand key point in the initial video 301 is repeatedly detected until an n^{th} left-hand action time is obtained. Using the same or similar detection method for the left-hand movement trajectory, a first right-hand action time to an n^{th} right-hand action time and a first body action time to an n^{th} body action time may be obtained. According to the first body action time to the n^{th} body action time, a body pose recognition is performed on each initial action video segment corresponding to each of the first body action time to the n^{th} body action time in the initial video 301 to obtain a body action type. For example, the body action type may be "step backward". A gesture recognition is performed on each initial action video segment corresponding to each of the first left-hand action time to the n^{th} left-hand action time in the initial video 301, and a gesture recognition is performed on each initial action video segment corresponding to each of the first right-hand action time to the n^{th} right-hand action time in the initial video 301, thereby obtaining a left-hand action type or a right-hand action type of the initial action video. The right-hand action type may be "holding up a 'one'''. The action type may include a body action type, a left-hand action type, and a right-hand action type. By aggregating the action types of the initial action video segments along with the action times corresponding to the initial action video segments, segmentation subtask parameters 302 for segmenting the initial video 301 may be obtained. Target subtask parameters matching the specified action may be selected according to the action types in the segmentation subtask parameters 302, and the initial video 301 may be segmented based on the action start time start_time and action end time end_time in the target subtask parameters, thereby obtaining the action video segments.

According to an embodiment of the present disclosure, the action description information may be generated by understanding the action video segment. For example, the action description information may be determined by: processing the action video segment and a segment-related text for the action video segment using a third large model to obtain the action description information.

In some embodiments, the third large model includes a large multimodal model. It should be noted that for ease of explanation of the video generation method provided in the present disclosure, the third large model described in embodiments of the present disclosure is exemplified by a large multimodal model. The large multimodal model involved in embodiments of the present disclosure is not used to limit the specific model structure or type of the third large model.

According to an embodiment of the present disclosure, the segment-related text may be understood as a text related to the action video segment. The segment-related text may include a subtitle text for the action video segment, a speech text for the action video segment, an advertisement text displayed in the action video segment, a product name text, a background board text, and the like. The segment-related text may be recognized from the video frames of the action video segment using text recognition technology, or it may be obtained by performing speech recognition on speech segment data of the action video segment using speech recognition technology. The specific method for recognizing the segment-related text is not limited in embodiments of the present disclosure.

According to an embodiment of the present disclosure, the large multimodal model refers to a large model capable of processing multimodal data such as images and texts. By processing the action video segment and the segment-related text, the large multimodal model may understand the action attribute information such as action intent, action type, action amplitude, and action object of the specified action expressed in the action video segment. As a result, the action description information may accurately represent the action attribute information, so that the large language model may accurately generate a target speech segment text matching the action attribute information according to the accurate action description information, and the target object may perform the specified action matching the speech segment text, thereby improving the expressiveness and richness of the target video.

In an embodiment, the action description information is determined by: processing the action video segment and the segment-related text for the action video segment using a large multimodal model to obtain an action attribute information; and processing the action attribute information using a large language model to obtain an action description information semantically matching the action intent data.

According to an embodiment of the present disclosure, the action intent data in the action attribute information is used to represent an explanatory intent corresponding to the specified action. The action intent data may represent, for example, an intent of the target object to explain an anti-torsion performance of the target product, or represent an explanatory intent to demonstrate the result after applying the target product such as moisturizing cream. The type of explanatory intent represented by the action intent data is not limited in embodiments of the present disclosure.

According to an embodiment of the present disclosure, the action description information is used to describe at least one action attribute information selected from: an item information related to the specified action, a virtual prop information related to the specified action, an object role information of the target object performing the specified action, and an action type information of the specified action.

According to an embodiment of the present disclosure, by generating an object attribute information including action intent data using the large multimodal model , and then processing the object attribute information using the large language model to obtain an action description information that may accurately represent the explanatory intent and other action attributes of the specified action, it is possible to filter out information of redundant descriptions of the specified action in the action video segment through collaboration of multiple large models, and improve the accuracy and naturalness of the action description information in representing the action intent and other object attributes. The accurate action description information may then be used to prompt the large language model to generate a target script with natural expression and logical coherence. Based on the target script as a prompt for the vision large model, the vision large model may be prompted to generate a target video in which the speech expression and the action expression of the target object are well-matched, thereby generating a high-quality target video through collaboration of multiple large models based on accurate action description information.

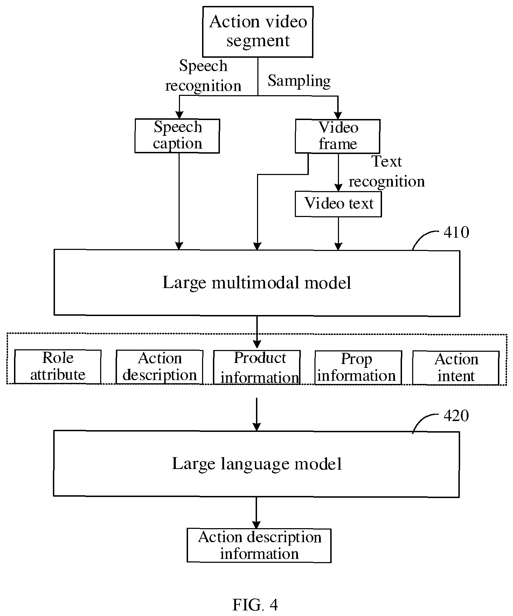

In an embodiment, the action description information may be determined based on FIG. 4 and the following embodiments.

FIG. 4 schematically shows a schematic diagram of determining an action description information according to an embodiment of the present disclosure.

As shown in FIG. 4, Automatic Speech Recognition (ASR) is performed on the speech segment data of the action video segment to obtain a speech caption for the action video segment, and video frame sampling is performed on the action video segment to obtain sampled video frames. Text recognition is then performed on the video frames based on Optical Character Recognition (OCR) technology to obtain a video text appearing in the action video segment. The speech caption, the sampled video frames, and the video text are processed using a large multimodal model 410 to obtain an action attribute information. The action attribute information includes role attributes, initial action descriptions, product information, prop information, and action intent. The action attribute information may be processed using a large language model 420 to remove redundant information and correct errors of the action attribute information, thereby obtaining an action description information.

According to an embodiment of the present disclosure, processing the requirement information using the first large model to obtain the target script includes: processing the requirement information using a large language model to obtain a script outline for the target video; performing a knowledge retrieval based on the script outline to obtain a script material for the target speech segment text; and processing the script material using the large language model to obtain the target script.

According to an embodiment of the present disclosure, the script material indicates knowledge matching the requirement intent represented by the requirement information. The requirement information includes the action description information, as well as at least one of an object role attribute information of the target object, a target product information for the target video, or a target virtual prop information for the target video. The script outline may represent a planning framework information of the target script to be generated in multiple dimensions such as script content theme, role attribute setting, script plot structure, and script style positioning. By generating the script outline using the strong semantic understanding and reasoning capabilities of the large language model, it is possible to achieve overall planning of the target script according to the requirement intent represented by the requirement information. Further, the script material retrieved based on the script outline may meet the professional knowledge requirements for generating the target script, and the target script may be generated by the large language model processing the script material with accurate knowledge materials, thereby enhancing the professionalism and richness of the subsequent target video. Furthermore, by matching the target speech text expression and the specified action expression of the target object, an expression level of professional knowledge in the target video may be improved.

In an embodiment, processing the script material using the large language model to obtain the target script includes processing the script material and the script outline using the large language model to obtain the target script. Thus, the large language model may be constrained by a creative intent framework represented by the script outline to generate a target script matching the requirement intent of the requirement information, thereby improving a creative quality of the target script.

According to an embodiment of the present disclosure, performing a knowledge retrieval based on the script outline to obtain a script material for the target speech segment text includes: processing the script outline using the large language model to obtain a query information; and performing a knowledge retrieval based on the query information to obtain the script material.

In an embodiment, performing a knowledge retrieval based on the script outline may include retrieving from a professional knowledge base based on the query information such as keywords and semantic vectors in the script outline.

In an embodiment, performing a knowledge retrieval based on the script outline may include processing the requirement information and the script outline using the large language model to obtain a query information, and retrieving from a professional knowledge base based on the query information. Thus, on the basis that the script outline is obtained by systematical planning of the script creation intent based on the requirement information, it is possible to actively collect relevant knowledge writing materials around the key planning directions of the script outline, thereby improving the professionalism, accuracy and consistency of the script material with the overall creation intent of the script, and further improving the logical coherence of the target script and the expression effect of the target speech segment text in the target script.

In an embodiment, performing a knowledge retrieval based on the query information to obtain the script material includes: performing a knowledge retrieval based on the query information to obtain an initial script material; performing a semantic relevance detection between the initial script material and a predetermined requirement condition to obtain a defect detection result indicating that the initial script material fails to meet the predetermined requirement condition; processing the defect detection result and the script outline using the large language model to obtain an updated query information; and performing a knowledge retrieval based on the updated query information to obtain the script material.

According to an embodiment of the present disclosure, the predetermined requirement condition may be used to constrain the relevance between the script material and the creation intent of the target script. The predetermined requirement condition may be determined based on the requirement information, or may be determined in other ways. For example, the predetermined requirement condition may be determined based on an information input via interactive operations. Examples of the predetermined requirement condition may include the quantity of script materials, the type of knowledge represented by the script materials, and so on. The specific setting of the predetermined requirement condition is not limited in embodiments of the present disclosure.

In an embodiment, the large language model may process the initial script material and the predetermined requirement condition to obtain a defect result that indicates a defect type of the initial script material. Then, a reflection and inspection may be performed on the currently generated initial script material through collaboration of the large language model. The defect result indicating the defect type may serve as a prompt to control the large language model to adjust a retrieval strategy by processing the defect detection result and the script outline, so that the semantic accuracy of the query information or the semantic range of the query information may be adjusted to obtain the updated query information. As a result, the knowledge retrieval process may be continuously optimized iteratively based on the updated query information to achieve a deep cyclic optimized retrieval chain of thinking, retrieval, reflection, and re-retrieval using the large language model, until a script material that meets the predetermined requirement condition is generated. In this way, the generated script material is logically coherent, sufficiently supported by knowledge information, and highly executable, thereby improving the creation quality of the target script.

According to an embodiment of the present disclosure, processing the script material using the large language model to obtain the target script may include: in a case that the script outline or the requirement information indicates that the target script is a long script exceeding a predetermined word count threshold or a predetermined video duration threshold, processing the script material using the large language model to obtain a first script segment, and processing the script material and the first script segment using the large language model to obtain a second script segment. Thus, it is possible to iteratively process the currently generated script segment and the script material using the large language model to obtain an updated script segment, until a last script segment is generated. A plurality of generated script segments are then combined to obtain the target script.

In an embodiment, the script segment may include a target speech segment text, and processing the script material using the large language model to obtain the target script includes: processing the script material using the large language model to obtain a first target speech segment text; processing the script material and the first target speech segment text using the large language model to obtain a second target speech segment text; and determining the target script based on the first target speech segment text and the second target speech segment text.

By processing the script material and the currently generated target speech segment texts using the large language model, the script creation may be performed using the large language model based on a multi-step collaborative method, so that each output target speech segment text may be accurately matched with the action attribute information of the corresponding specified action, thereby improving the quality of the target script.

In an embodiment, in a case that the script outline or the requirement information indicates that the target script is a short script not exceeding the predetermined word count threshold or the predetermined video duration threshold, the large language model may process the script material to directly obtain the target script.

In an embodiment, processing the script material using the large language model to obtain the first target speech segment text may include processing the script material and the script outline using the large language model to obtain the first target speech segment text; and processing the script material and the first script segment using the large language model to obtain the second script segment may include processing the script material, the script outline and the first script segment using the large language model to obtain the second script segment.

In an embodiment, the generated target script may be verified and evaluated using an evaluation module, so as to evaluate whether the currently generated target script meets a predetermined script condition according to a script detection result. If the currently generated target script fails to meet the predetermined script condition, then based on a reflection mechanism of the large language model, the large language model may process a script defect type indicated by the script detection result, the script material, and the script outline, so as to iteratively optimize the current target script until the output target script meets the predetermined script condition. In this way, the quality of the target video may be improved.

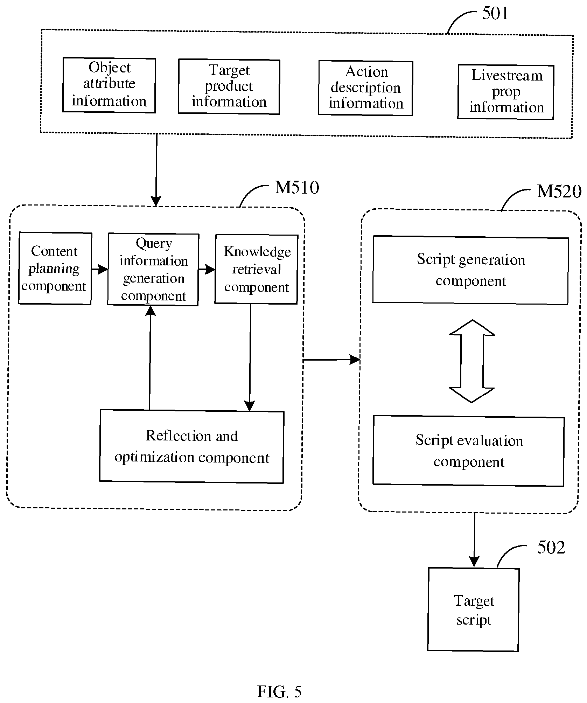

FIG. 5 schematically shows a schematic diagram of determining a target script according to an embodiment of the present disclosure.

As shown in FIG. 5, a requirement information 501 includes an object attribute information of the target object, a target product information, an action description information, and a livestream prop information serving as the target virtual prop information. The requirement information 501 is input into a script material planning module M510 to output a script material. The script material is processed using a script generation module M520 to output a target script 502.

The script material planning module M510 includes a content planning component, a query information generation component, a knowledge retrieval component, and a reflection and optimization component. The content planning component is configured to perform script content planning for the target script by invoking the large language model to process the requirement information 501, thereby obtaining a script outline. The query information generation component is configured to invoke the large language model to process the script outline and the requirement information 501 to obtain a query information for knowledge retrieval. The knowledge retrieval component is configured to perform a knowledge retrieval operation based on the current query information obtained from the query information generation component, thereby obtaining an initial script material. The reflection and optimization component is configured to invoke the large language model to process the initial script material generated by the knowledge retrieval component in each iteration, so as to perform a semantic relevance detection between the initial script material and the predetermined requirement condition. If the detection result indicates a presence of a defect detection result, the defect detection result is transmitted to the query information generation component. The query information generation component may then invoke the large language model to process the script outline, the requirement information 501, and the defect detection result to generate an updated initial script material. The reflection and optimization component may iteratively detect the already generated initial script materials and determine a script material that meets the predetermined requirement condition.

The script generation module M520 includes a script generation component and a script evaluation component. The script generation component may generate a short script of a short-script type by invoking the large language model to process at least one of the script material and the script outline. Alternatively, if the requirement information 501 indicates a long-script type, the script generation component may generate a first target speech segment text by invoking the large language model to process at least one of the script material and the script outline, and then generate a second target speech segment text by invoking the large language model to process the first target speech segment text and at least one of the script material and the script outline, until N target speech segment texts are generated, thereby obtaining a long script of the long-script type, where N is an integer greater than 1. The script evaluation component may invoke the large language model to process the long script or short script in order to perform verification, logical error checking, and other evaluation operations on the long script or short script, thereby obtaining a target script 502 that meets evaluation requirements.

According to an embodiment of the present disclosure, the target script includes a plurality of target speech segment texts arranged in sequence. Arrangement positions of the plurality of target speech segment texts in the target script may be represented based on a script structure of the target script. A plurality of action video segments may correspond to the plurality of target speech segment texts.

According to an embodiment of the present disclosure, processing the target script and the action video segment using the second large model includes: processing two associated action video segments among the plurality of action video segments using a vision large model to obtain a transition action video segment; and processing the target script, the associated action video segments, and the transition action video segment using the vision large model to obtain the target video.

In some examples, the transition action video segment indicates a transition action between two different specified actions represented by the two associated action video segments, and the two associated action video segments are determined based on the arrangement positions of the plurality of target speech segment texts in the target script. The two associated action video segments may be two action video segments with an action continuity relationship among the plurality of action video segments. For example, they may be two action video segments respectively corresponding to two adjacent target speech segment texts in the target script.

In some examples, the transition action video segment is obtained by processing a transition action prompt word and two associated action video segments among the plurality of action video segments using the vision large model. The transition action prompt word may be used to control the vision large model to understand the specified actions respectively corresponding to the two associated action video segments, so that the transition action video segment may accurately represent the transition action between the two different specified actions. The transition action video segment may be arranged between the two different associated action video segments, so as to achieve a natural transition between the two different specified actions through the transition action represented by the transition action video segment.

In some examples, when processing the target script, the associated action video segments and the transition action video segment using the vision large model, the vision large model may naturally combine the associated action video segments and the transition action video segment based on the requirement intent matching the requirement information represented by the target script. On the basis that the plurality of target action video segments in the target video are aligned with the expression of the target speech segment text, the plurality of specified actions may be presented in a natural and vivid manner through the target transition action video segments in the target action video segments, thereby improving a presentation effect of the target video.

In some examples, processing the target script, the associated action video segments and the transition action video segment using the vision large model to obtain the target video includes: processing the object attribute information in the target speech segment text, the associated action video segments, and the transition action video segment using the vision large model to obtain an intermediate video; and driving lip movements of the target object in the intermediate video based on speech audio data determined from the target speech segment text to obtain the target video.

The speech audio data may be audio data representing the speech segment text in the target script. The intermediate video may be a video that accurately and naturally displays a plurality of specified actions. By driving the lip movements of the target object in the intermediate video based on the speech audio data, the lip movements of the target object in the target video during the speech delivery may be matched with the audio information of the speech audio data, thereby enhancing the naturalness and expressiveness of the target video.

It should be noted that the speech audio data and the intermediate video may be processed using any type of algorithm in order to drive the lip movements of the target object in the intermediate video based on the speech audio data determined from the target speech segment text to obtain the target video. For example, the speech audio data and the intermediate video may be processed using a diffusion model. However, the present disclosure is not limited thereto, and the speech audio data and the intermediate video may also be processed using other types of algorithms. The specific method used to drive the lip movements of the target object in the intermediate video is not limited in embodiments of the present disclosure.

In an embodiment, the speech audio data and the intermediate video may be processed using a vision large model to obtain the target video, thereby improving the alignment between the lip movements of the target object in the target video and the speech audio data.

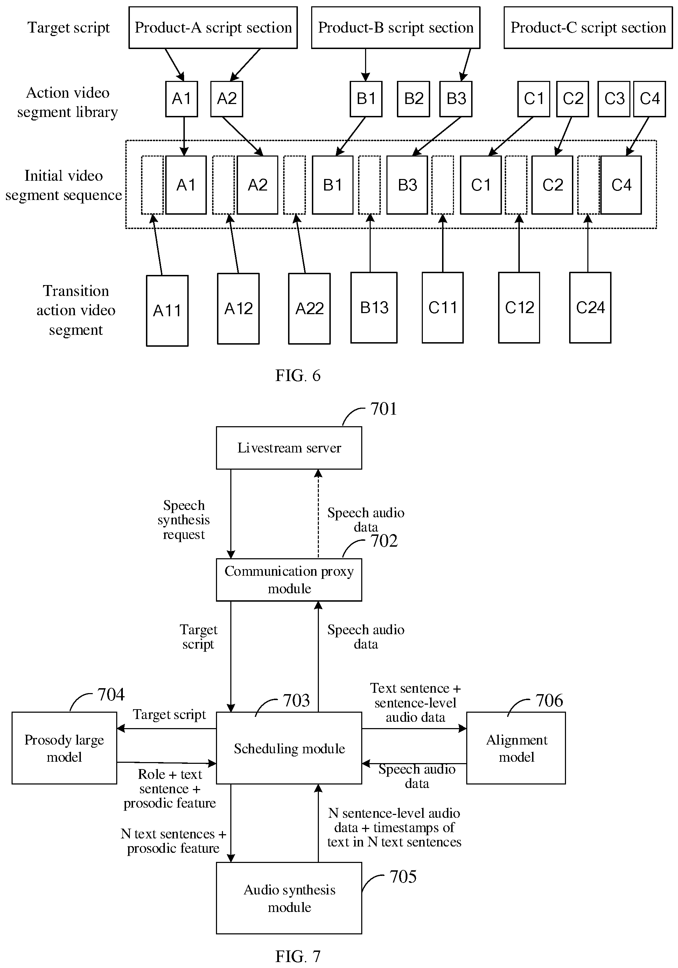

FIG. 6 schematically shows a schematic diagram of generating a target video according to an embodiment of the present disclosure.

As shown in FIG. 6, the target script may include three different script sections, namely a product-A script section, a product-B script section, and a product-C script section. Based on the action description information in the product-A script section, it may be determined that action video segments A1 and A2 in an action video segment library may be used to generate the target video. Based on the action description information in the product-B script section, it may be determined that action video segments B1 and B3 may be used to generate the target video. Based on the action description information in the product-C script section, it may be determined that action video segments C1, C2 and C4 may be used to generate the target video. According to the positions of the action description information respectively corresponding to the action video segments A1, A2, B1, B3, C1, C2 and C4 in the target script, it is possible to determine an arrangement order of the action video segments A1, A2, B1, B3, C1, C2 and C4 in an initial video segment sequence.

By processing the action video segments A1 and A2 as well as a context script information and context speech audio information in the target script related to the action video segments A1 and A2 using the vision large model, a transition action video segment A12 is obtained with the action video segments A1 and A2 as associated action video segments. By processing the action video segment A1 as well as the context script information and context speech audio information in the target script related to the action video segment A1 using the vision large model, a transition action video segment A11 is obtained with the action video segment A1 as the associated action video segment. The transition action video segment A11 may serve as a transition from beginning video content of the target video to the specified action represented by the action video segment A1. By processing the associated action video segments using the large language model, a plurality of transition action video segments A22, B13, C11, C12 and C24 may be obtained. It should be understood that the transition action video segment A22 may represent a transition action between the specified actions respectively represented by the action video segments A2 and B1, the transition action video segment B13 may represent a transition action between the specified actions respectively represented by the action video segments B1 and B2, the transition action video segment C11 may represent a transition action between the specified actions respectively represented by the action video segments B2 and C1, the transition action video segment C12 may represent a transition action between the specified actions respectively represented by the action video segments C1 and C2, and the transition action video segment C24 may represent a transition action between the specified actions respectively represented by the action video segments C2 and C4.

In an example, the transition action video segment A12 may be obtained by processing an end video frame of the action video segment A1 and a start video frame of the action video segment A2 using the vision large model.

The plurality of transition action video segments A11, A12, A22, B13, C11, C12, and C24 may be inserted at corresponding positions in the initial video segment sequence, thereby obtaining a video segment sequence in which the transition action video segments and the action video segments are arranged in order. The video segment sequence is then fused with the speech audio data to obtain a target video-audio sequence. The vision large model may be used as a facial-expression driving model to process the action video segments and transition action video segments in the target video-audio sequence as well as the object attribute information corresponding to the action video segments or transition action video segments in the target script, so as to control facial expressions of the target object during the speech delivery in the action video segments or transition action video segments according to facial-expression type, facial-expression timing and other facial-expression attribute information described in the target script, thereby obtaining the intermediate video. A lip-sync driving model may drive the target object in the intermediate video to perform lip movements corresponding to the text content in the target script according to the speech audio data, thereby obtaining the target video.

According to an embodiment of the present disclosure, the target video is determined by driving lip movements of the target object based on predetermined speech audio data. The speech audio data is determined by: processing the target script using the large language model to obtain a prosodic feature; and performing a speech synthesis on the target script based on the prosodic feature to obtain the speech audio data.

In some embodiments, the prosodic feature represents speech prosody of text sentences in the target script, and the speech prosody may include attribute information related to speech rhythm such as pause patterns, pause duration, intonation attribute, and speech rate. By processing the target script using the large language model, it is possible to output a prosodic feature consistent with the specified action and with the expression of the speech segment text based on integral semantics of the speech segment text of the target script and the accurate descriptions for the specified action by the action description information. When performing a speech synthesis on the target script based on such prosodic feature, the speech audio data obtained may drive the target object to perform a speech delivery in a natural and vivid manner according to the specified action, the speech segment text, and the requirement intent of other object attribute information in the requirement information. Further, by fusing the speech audio data and the intermediate video, the accuracy and vividness of the expression of the target object in the target video may be improved.

In some embodiments, performing a speech synthesis on the target script based on the prosodic feature to obtain the speech audio data includes: performing a speech synthesis on a text sentence in the target script based on the prosodic feature to obtain sentence-level audio data; updating an audio timing attribute of character-level audio sub-data in the sentence-level audio data based on a character-level timing attribute of a text character in the target script to obtain the speech audio data.

In an embodiment, the sentence-level audio data may refer to speech audio data for the target object to perform a speech delivery of text sentences in the target speech segment text. The audio timing attribute of the character-level audio sub-data in the sentence-level audio data may be updated using timestamps of text characters in the text sentence in the target speech segment text as the character-level timing attributes, so as to align the character-level audio sub-data in the sentence-level audio data with the text characters in the target speech segment text. Consequently, the speech audio data may accurately reflect each text character in the target speech segment text according to the speech prosody represented by the prosodic feature, thereby improving the expression accuracy of the speech audio data for the target speech segment text.

FIG. 7 schematically shows a schematic diagram of determining the speech audio data according to an embodiment of the present disclosure.

As shown in FIG. 7, the speech audio data generated in this embodiment is used to generate a livestream video, and it should be understood that the livestream video may be the target video. A livestream server 701 may be a server for publishing livestream videos. The livestream server 701 may send a speech synthesis request carrying the target script to a communication proxy module 702, and the speech synthesis request is used to request generation of speech audio data. The communication proxy module 702 may send the target script to a scheduling module 703. The scheduling module 703 may invoke a prosody large model 704 to process the target script to obtain a prosodic feature for the target script. The prosody large model 704 may further perform a semantic analysis on the target script to segment the target script into sentences, thereby obtaining text sentences in the target script as well as roles and prosodic features for the text sentences. The prosodic feature may represent respective speech rhythm of a plurality of target objects as different roles in the target script as well as interleaved expression rhythm between the plurality of target objects. The scheduling module 703 may send the N text sentences in the target script and the prosodic feature of the target script to an audio synthesis module 705, so as to schedule the audio synthesis module 705 to perform a speech synthesis on the N text sentences according to the prosodic features using a Text-to-Speech (TTS) algorithm, thereby obtaining N sentence-level audio data respectively corresponding to the N text sentences. The text-to-speech algorithm may include a speech synthesis algorithm model such as WaveNet. In addition, the audio synthesis module 705 may annotate text characters in the text sentences with character-level timing attributes, thereby obtaining character-level timestamps of the text characters in the text sentences.

The scheduling module 703 then sends the N text sentences and the N sentence-level audio data to an alignment model 706, so as to schedule the alignment model 706 to update the audio timing attributes of the character-level audio sub-data of the sentence-level audio data using the character-level timestamps of the text characters in the text sentences, thereby obtaining speech audio data with timing attributes aligned at character granularity. The alignment model 706 may perform a multi-track alignment on the N sentence-level audio data. For example, the alignment model 706 may separate the audio data according to different roles of the plurality of target objects to obtain independent track data of the target object for each role, and silent segments in the independent track data may be padded with silence sub-data, thereby achieving accurate synchronization of the independent tracks of the plurality of target objects. The scheduling module 703 then sends the N sentence-level audio data, a timing axis of the N text sentences of the target script, and the character-level timestamps in the text sentences to the communication proxy module 702. The communication proxy module 702 uploads the complete speech audio data to a storage device of the livestream server 701, so that the livestream server 701 may perform an asynchronous callback according to a storage access link of the speech audio data. The livestream server 701 may then retrieve the complete speech audio data to drive the lip movements of the target object, thereby generating a livestream video as the target video.

According to an embodiment of the present disclosure, the method for generating a digital human video based on a large model may further include the following operations: in response to a target interaction instruction, processing a dynamic video requirement information corresponding to the target interaction instruction using the large language model to obtain a dynamic video segment script; performing a video segment generation based on the dynamic video script to obtain a dynamic video segment; and inserting the dynamic video segment into the target video.

In some embodiments, the target interaction instruction may be acquired during playback of the target video, and the target interaction instruction may be determined based on a user's interaction operation.

In some embodiments, the target interaction instruction includes at least one of a product ordering instruction, a comment generation instruction, or a like behavior instruction. The dynamic video requirement information corresponding to the target interaction instruction may represent user's interaction requirement during viewing of the target video. By processing the dynamic video requirement information corresponding to the target interaction instruction using the large language model, it is possible to obtain a dynamic segment script that meets the intent of the user's interaction requirement. Subsequently, the dynamic video segment script may be processed using a vision large model to obtain a dynamic video segment, and the dynamic video segment may be inserted into the target video during playback, so as to fulfill the user's interaction requirement during the viewing of the target video.

In some embodiments, the dynamic video requirement information has a mapping relationship with the target interaction instruction, and the dynamic video requirement information may include a dynamic video action description information for the dynamic video segment. By processing the dynamic video requirement information using the large language model, the dynamic video segment script may drive the vision large model to generate a dynamic video segment in which the target object performs a speech delivery in a vivid manner while performing a dynamic video action, thereby enhancing user's immersive experience during the viewing of the dynamic video segment.

In some embodiments, processing the dynamic video requirement information corresponding to the target interaction instruction using the large language model to obtain a dynamic video segment script includes: in response to the target interaction instruction, performing a dynamic video task decision process based on the target interaction instruction to obtain a task decision result; and processing a task type and a context script content using the large language model to obtain the dynamic video segment script, where the context script content is determined from the target script based on an insertion position information.

In an embodiment, the task decision result includes a task type associated with the dynamic video segment and an insertion position information of the dynamic video segment in the target video. The task decision result may be obtained by processing the target interaction instruction using a predetermined decision model. The decision model may be constructed based on machine learning algorithms such as a decision tree, or may be built based on other types of algorithms, which is not limited in embodiments of the present disclosure.

In an embodiment, the context script content determined from the target script based on the insertion position information may refer to semantic content of context script surrounding the insertion position in the target script. Thus, by processing the task type and the context script content using the large language model, the large language model may generate a dynamic video segment text that may connect the target script contents before and after the insertion position, based on a full understanding of the context plot into which the dynamic video segment should be inserted in the target video. Consequently, after the generated dynamic video segment is inserted at the insertion position in the target video, the dynamic video segment and the target video after the insertion position may be displayed with semantic coherence in a natural and vivid manner, thereby enhancing the overall expressiveness and interactivity of the target video and improving the video quality.

In an example, the dynamic video segment may display a specified object performing a speech delivery with lip movements corresponding to the dynamic video segment text, and simultaneously play the speech audio data corresponding to the dynamic video segment text, thereby improving the expressiveness of the dynamic video segment.

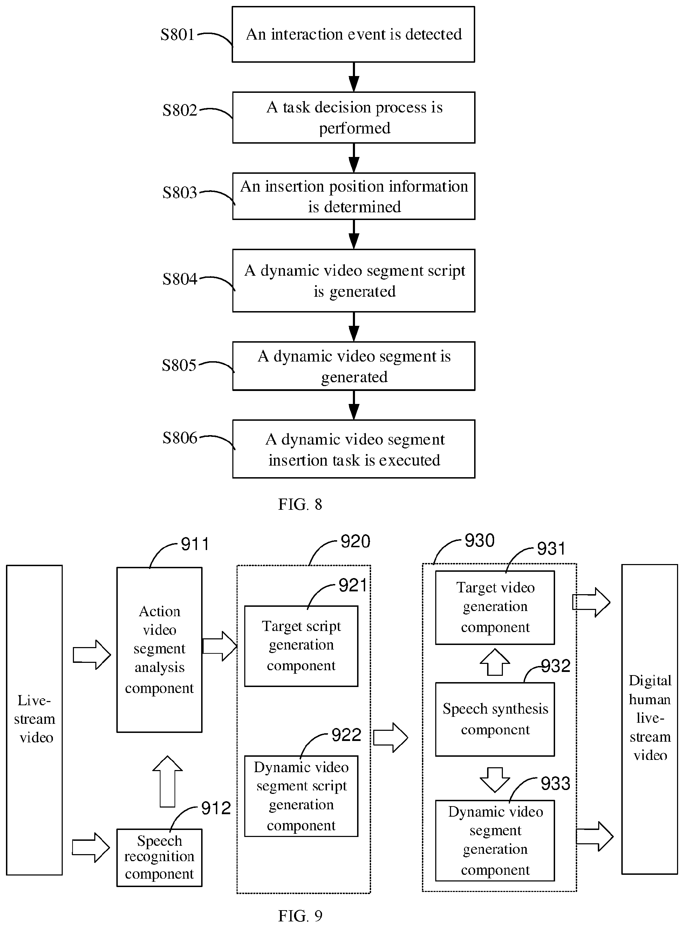

FIG. 8 schematically shows a flowchart of determining a dynamic video segment according to an embodiment of the present disclosure.

As shown in FIG. 8, a dynamic video segment may be determined by operation S801 to operation S806.

In operation S801, an interaction event is detected. The target interaction instruction is determined by detecting interaction instruction parameters such as the number of interaction instructions and the type of interaction instructions.

In operation S802, a task decision process is performed according to the target interaction instruction to obtain a decision result indicating whether to trigger a dynamic video segment generation task, and to determine a task type for the dynamic video segment. In this embodiment, the target interaction instruction may be a comment containing keywords "shelf life" posted by a user in the livestream room. The task type may be generating a dynamic video segment for displaying the shelf life.

In operation S803, an insertion position information of the dynamic video segment is determined from the ongoing target video according to the task decision result. An insertion position indicated by the insertion position information may be a candidate insertion point that has been determined before the playback of the target video. Alternatively, the insertion position may be determined by detecting a current playback progress of the target video, and a position between two different target action video segments in the target video may be determined as the insertion position.

In operation S804, a dynamic video segment script is generated. Specifically, the large language model may process the comment content of the target interaction instruction as well as the context script content determined from the target script based on the insertion position information, thereby obtaining a dynamic query information. A knowledge retrieval is then performed using the dynamic query information based on a retrieval-augmented strategy, and a dynamic script material may be generated. The large language model may then process the dynamic script material to obtain a dynamic video segment script as a response to the target interaction instruction.

In operation S805, a dynamic video segment is generated. Specifically, the speech synthesis model may process the dynamic script material to obtain dynamic speech audio data. The vision large model may process the dynamic script material to drive the target object according to the actions, facial expressions, and other information indicated by the dynamic script material, thereby generating the dynamic video segment. It is also possible to determine a target action video segment associated with the dynamic video segment based on the insertion position information. The vision large model may then process the dynamic video segment and the target action video segment to obtain a transition action video segment between the dynamic video segment and the target action video segment. The dynamic voice audio data may drive the lip movements of the target object in the dynamic video segment and the transition action video segment, thereby obtaining a dynamic video segment for introducing the "shelf life" of the target product and a transition video segment.

In operation S806, a dynamic video segment insertion task is executed. Specifically, the dynamic video segment for introducing the "shelf life" of the target product and the transition video segment are inserted at the insertion position in the ongoing target video. The dynamic video segment and the transition video segment may be added to the target video, or the dynamic video segment and the transition video segment may replace partial video segment content in the target video.

FIG. 9 schematically shows a schematic diagram of a method for generating a digital human video based on a large model according to an embodiment of the present disclosure.

As shown in FIG. 9, an initial video is a stored livestream video. An action video segment analysis component 911 may invoke a large multimodal model and a large language model to collaboratively process the action video segments in the livestream video and the video text for the livestream video, thereby obtaining an action description information. The video text may include a speech caption text for the livestream video, which is generated by a speech recognition component 912. The action video segment may be obtained by performing a position change detection on a key point of the target object in the livestream video and performing video segmentation on the initial video according to a position change detection result.

A script generation module 920 includes a target script generation component 921 and a dynamic video segment script generation component 922. The target script generation component 921 is configured to invoke a large language model to process the action description information to obtain a target script. A video generation component 931 of a video generation module 930 is configured to invoke a vision large model to process the target script, the action video segment and the speech audio data, thereby obtaining a digital human livestream video as the target video, in which the target object performs a specified action while performing a speech delivery. The speech audio data may be generated by processing the target script using a speech synthesis component 932 of the video generation module 930. In the digital human livestream video, a host object and a co-host object serve as different target objects to jointly perform a speech delivery through dual-speaker interactive dialogue or similar methods, with the speech delivery being aligned with the specified action, while exhibiting matching facial expressions, intonations and more rich information.

During the playback of the digital human livestream video, the dynamic video segment script generation component 922 may detect a target interaction instruction to trigger a dynamic video segment generation task, and determine an insertion position information where a dynamic video segment should be inserted into the digital human livestream video. The large language model may be invoked to process a dynamic video requirement information indicated by the target interaction instruction and a context script content corresponding to the insertion position information, thereby obtaining a dynamic video segment script. A dynamic video segment generation component 933 of the video generation module 930 may generate a dynamic video segment by invoking the vision large model to process the dynamic video segment script, the action video segment corresponding to the dynamic action description information in the dynamic video segment script, and the dynamic speech audio data representing the dynamic video segment script. The dynamic speech audio data may be determined by the speech synthesis component 932 invoking a speech synthesis model to process the dynamic video segment script. The dynamic video segment may be inserted at the insertion position in the digital human livestream video during the streaming, thereby improving the interaction experience of users during the streaming.

Based on the method for generating a digital human video based on a large model provided in the foregoing embodiments, an embodiment of the present disclosure further provides an apparatus for generating a digital human video based on a large model.

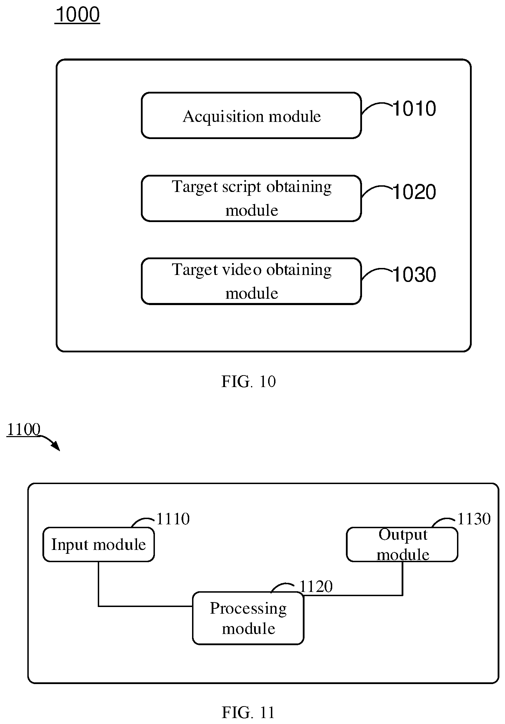

FIG. 10 schematically shows a block diagram of an apparatus for generating a digital human video based on a large model according to an embodiment of the present disclosure.

As shown in FIG. 10, an apparatus 1000 for generating a digital human video based on a large model includes an acquisition module 1010, a target script obtaining module 1020, and a target video obtaining module 1030.

The acquisition module 1010 is configured to acquire a requirement information. The requirement information includes an action description information for describing a specified action video segment, and the action video segment represents a specified action of a target object.

The target script obtaining module 1020 is configured to process the requirement information using a first large model to obtain a target script. The target script includes a target speech segment text matching the action description information.

The target video obtaining module 1030 is configured to process the target script and the action video segment using a second large model to obtain a target video for displaying a target digital human performing a speech delivery based on the target speech segment text while performing the specified action.

According to an embodiment of the present disclosure, the action description information is determined by: processing the action video segment and a segment-related text for the action video segment using a third large model to obtain the action description information.

According to an embodiment of the present disclosure, the action description information is determined by: processing the action video segment and a segment-related text for the action video segment using a third large model to obtain an action attribute information, where action intent data in the action attribute information represents an explanatory intent corresponding to the specified action; and processing the action attribute information using a large language model to obtain an action description information semantically matching the action intent data.

In some embodiments, the third large model includes a large multimodal model .

According to an embodiment of the present disclosure, the action description information is used to describe at least one action attribute information selected from: an item information related to the specified action, a virtual prop information related to the specified action, an object role information of the target object performing the specified action, or an action type information of the specified action.

According to an embodiment of the present disclosure, the target script obtaining module 1020 includes a first processing sub-module, a retrieval sub-module, and a target script obtaining sub-module.

The first processing sub-module is configured to process the requirement information using a large language model to obtain a script outline for the target video.

The retrieval sub-module is configured to perform a knowledge retrieval based on the script outline to obtain a script material for the target speech segment text, where the script material indicates knowledge matching the requirement intent represented by the requirement information.

The target script obtaining sub-module is configured to process the script material using the large language model to obtain the target script.

According to an embodiment of the present disclosure, the retrieval sub-module includes a query information obtaining unit and a retrieval unit.

The query information obtaining unit is configured to process the script outline using the large language model to obtain a query information.

The retrieval unit is configured to perform a knowledge retrieval based on the query information to obtain the script material.

According to an embodiment of the present disclosure, the retrieval unit includes an initial script material obtaining sub-unit, a defect detection result obtaining sub-unit, a query information obtaining sub-unit, and a script material obtaining sub-unit.

The initial script material obtaining sub-unit is configured to perform a knowledge retrieval based on the query information to obtain an initial script material.

The defect detection result obtaining sub-unit is configured to perform a semantic relevance detection between the initial script material and a predetermined requirement condition to obtain a defect detection result, which indicates that the initial script material fails to meet the predetermined requirement condition.

The query information obtaining sub-unit is configured to process the defect detection result and the script outline using the large language model to obtain an updated query information.

The script material obtaining sub-unit is configured to perform a knowledge retrieval based on the updated query information to obtain the script material.

According to an embodiment of the present disclosure, the target script obtaining sub-module includes a first obtaining unit, a second obtaining unit, and a target script obtaining unit.

The first obtaining unit is configured to process the script material using the large language model to obtain a first target speech segment text.

The second obtaining unit is configured to process the script material and the first target speech segment text using the large language model to obtain a second target speech segment text.

The target script obtaining unit is configured to determine the target script based on the first target speech segment text and the second target speech segment text.

According to an embodiment of the present disclosure, the requirement information further includes at least one of: an object role attribute information of the target object, a target product information for the target video, or a target virtual prop information for the target video.

According to an embodiment of the present disclosure, the target script includes a plurality of target speech segment texts arranged in sequence; and the target video obtaining module 1030 includes a transition action video segment obtaining sub-module and a target video obtaining sub-module.

The transition action video segment obtaining sub-module is configured to process two associated action video segments among a plurality of action video segments using a vision large model to obtain a transition action video segment, where the transition action video segment represents a transition action between two different specified actions represented by the two associated action video segments, and the two associated action video segments are determined based on the arrangement positions of the plurality of target speech segment texts in the target script.

The target video obtaining sub-module is configured to process the target script, the associated action video segments and the transition action video segment using the vision large model to obtain the target video.

According to an embodiment of the present disclosure, the target video obtaining sub-module includes an intermediate video obtaining unit and a target video obtaining unit.

The intermediate video obtaining unit is configured to process the object attribute information in the target speech segment text, the associated action video segments, and the transition action video segment using the vision large model to obtain an intermediate video.

The target video obtaining unit is configured to drive lip movements of the target object in the intermediate video based on speech audio data determined from the target speech segment text, thereby obtaining the target video.

According to an embodiment of the present disclosure, the target video is determined by driving lip movements of the target object based on predetermined speech audio data. The speech audio data is determined by: processing the target script using the large language model to obtain a prosodic feature, where the prosodic feature represents speech prosody of text sentences in the target script; and performing a speech synthesis on the target script based on the prosodic feature to obtain the speech audio data.

According to an embodiment of the present disclosure, performing a speech synthesis on the target script based on the prosodic feature to obtain the speech audio data includes: performing a speech synthesis on a text sentence in the target script based on the prosodic feature to obtain sentence-level audio data; and updating an audio timing attribute of character-level audio sub-data in the sentence-level audio data based on a character-level timing attribute of a text character in the target script, thereby obtaining the speech audio data.

According to an embodiment of the present disclosure, the apparatus 1000 for generating a digital human video based on a large model further includes a dynamic video segment script obtaining module, a dynamic video segment generation module, and an insertion module.

The dynamic video segment script obtaining module is configured to, in response to a target interaction instruction, process a dynamic video requirement information for the target interaction instruction using a large language model to obtain a dynamic video segment script.

The dynamic video segment generation module is configured to perform a video segment generation based on the dynamic video script to obtain a dynamic video segment.

The insertion module is configured to insert the dynamic video segment into the target video.

According to an embodiment of the present disclosure, the dynamic video segment script obtaining module includes a task decision sub-module and a dynamic video segment script obtaining sub-module.

The task decision sub-module is configured to, in response to the target interaction instruction, perform a dynamic video task decision process based on the target interaction instruction to obtain a task decision result, where the task decision result includes a task type associated with the dynamic video segment and an insertion position information of the dynamic video segment in the target video.

The dynamic video segment script obtaining sub-module is configured to process the task type and a context script content using the large language model to obtain the dynamic video segment script, where the context script content is determined from the target script based on the insertion position information.

According to an embodiment of the present disclosure, the target interaction instruction includes at least one of a product ordering instruction, a comment generation instruction, or a like behavior instruction.

According to an embodiment of the present disclosure, the action video segment is determined by: performing a position change detection on a key point of the target object in an initial video to obtain a position change detection result; determining an initial action video segment from the initial video based on the position change detection result; performing an action type detection on the initial action video segment to obtain an action type for the initial action video segment; and determining an initial action video segment matching a predetermined action type as the action video segment.

FIG. 11 schematically shows a structural block diagram of an artificial intelligence agent according to an embodiment of the present disclosure.

In an embodiment of the present disclosure, as shown in FIG. 11, an AI agent 1100 may include an input module 1110, a processing module 1120, and an output module 1130.

The input module 1110 is configured to receive an input information.

The processing module 1120 is configured to determine a target task based on the input information received by the input module, determine a large language model and a vision large model based on the target task, and performing the method for generating a digital human video based on a large model provided in embodiments of the present disclosure by invoking the large language model and the vision large model, thereby obtaining an output information.

The output module 1130 is configured to output the output information obtained by the processing module.

According to an embodiment of the present disclosure, the input module 1110 is used to receive or sense information such as queries, requests, instructions, signals or data from the outside world (e.g., users or external environments) and convert the information into a format that the AI agent 1100 may understand and process. The input module 1110 is a primary link for the AI agent 1100 to interact with the outside world, enabling the AI agent 1100 to efficiently and accurately acquire necessary "sensory" information from the outside world and make a response to the information.

In an example, the input module 1110 may input the aforementioned requirement information, action video segments, and so on.

In an example, the processing module 1120 is a core support for the AI agent 1100's ability to handle complex tasks. The processing module 1120 may perform the method for generating a digital human video based on a large model described above.

In an example, the performance of the processing module 1120 may be closely related to the large model on which the AI agent 1100 is based. In order to fully leverage the capabilities of the large model, an internal structure of the processing module 1120 may be designed to be highly configurable and scalable, so as to handle various types of tasks and requirements in real-world scenarios.

In an example, after the AI agent 1100 acquires the requirement information, the processing module 1120 may process the requirement information using a large language model to generate a target script, process the target script and the action video segments using a vision large model to generate a target video, and send the target video to the output module 1130.

It may be understood that although the large language models have excellent language understanding and generation capabilities, like humans, their capability to perform tasks are limited without any tools. Once the AI agent 1100 is endowed with the ability to invoke tools, it can accomplish tasks such as performing mathematical calculations using a calculator, conducting data analysis using Python, or obtaining weather forecasts using a search engine.

In an example, the output module 1130 may output the target video mentioned above.

The AI agent 1100 according to embodiments of the present disclosure may simply and effectively enhance the level of intelligence and improve flexibility and versatility.

According to embodiments of the present disclosure, the present disclosure further provides an electronic device, a readable storage medium, and a computer program product.

According to embodiments of the present disclosure, an electronic device is provided, including: at least one processor; and a memory communicatively connected to the at least one processor. The memory stores instructions executable by the at least one processor, and the instructions are used to, when executed by the at least one processor, cause the at least one processor to implement the method described above.

According to embodiments of the present disclosure, a non-transitory computer-readable storage medium having computer instructions therein is provided, and the computer instructions are used to cause a computer to implement the method described above.

According to embodiments of the present disclosure, a computer program product containing a computer program is provided, and the computer program is used to, when executed by a processor, cause the processor to implement the method described above

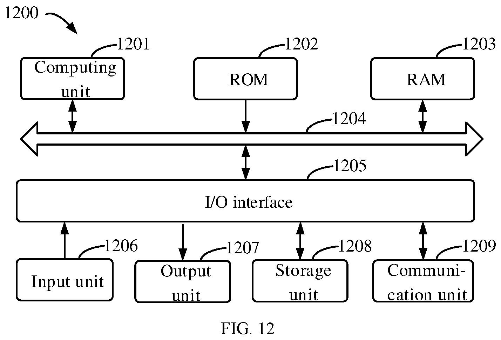

FIG. 12 shows a schematic block diagram of an example electronic device that may be used to implement the method for generating a digital human video based on a large model according to the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 12, the electronic device 1200 includes a computing unit 1201 which may perform various appropriate actions and processes according to a computer program stored in a read only memory (ROM) 1202 or a computer program loaded from a storage unit 12012 into a random access memory (RAM) 1203. In the RAM 1203, various programs and data necessary for an operation of the electronic device 1200 may also be stored. The computing unit 1201, the ROM 1202 and the RAM 1203 are connected to each other through a bus 1204. An input/output (I/O) interface 1205 is also connected to the bus 1204.

A plurality of components in the electronic device 1200 are connected to the I/O interface 1205, including: an input unit 1206, such as a keyboard, or a mouse; an output unit 1207, such as displays or speakers of various types; a storage unit 12012, such as a disk, or an optical disc; and a communication unit 1209, such as a network card, a modem, or a wireless communication transceiver. The communication unit 1209 allows the electronic device 1200 to exchange information/data with other devices through a computer network such as Internet and/or various telecommunication networks.

The computing unit 1201 may be various general-purpose and/or dedicated processing assemblies having processing and computing capabilities. Some examples of the computing units 1201 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 1201 executes various methods and processes described above, such as the method for generating a digital human video based on a large model. For example, in some embodiments, the method for generating a digital human video based on a large model may be implemented as a computer software program which is tangibly embodied in a machine-readable medium, such as the storage unit 12012. In some embodiments, the computer program may be partially or entirely loaded and/or installed in the electronic device 1200 via the ROM 1202 and/or the communication unit 1209. The computer program, when loaded in the RAM 1203 and executed by the computing unit 1201, may execute one or more steps in the method for generating a digital human video based on a large model described above. Alternatively, in other embodiments, the computing unit 1201 may be used to perform the method for generating a digital human video based on a large model by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the method for generating a digital human video based on a large model of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a standalone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. A relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method for generating a digital human video based on a large model, comprising:
acquiring (S210) a requirement information, wherein the requirement information comprises an action description information for describing a specified action video segment, and the action video segment represents a specified action of a target object;
processing (S220) the requirement information using a first large model to obtain a target script, wherein the target script comprises a target speech segment text matching the action description information; and
processing (S230) the target script and the action video segment using a second large model to obtain a target video for displaying a target digital human performing a speech delivery based on the target speech segment text while performing the specified action.

2. The method according to claim 1, wherein the action description information is determined by:
processing the action video segment and a segment-related text for the action video segment using a third large model to obtain the action description information.

3. The method according to claim 1 or 2, wherein the action description information is determined by:
processing the action video segment and a segment-related text for the action video segment using a third large model to obtain an action attribute information, wherein action intent data in the action attribute information represents an explanatory intent corresponding to the specified action; and
processing the action attribute information using a large language model (420) to obtain an action description information semantically matching the action intent data, wherein the third large model comprises a large multimodal model (410).

4. The method according to claim 3, wherein the action description information is configured to describe at least one action attribute information selected from: an item information related to the specified action, a virtual prop information related to the specified action, an object role information of the target object performing the specified action, or an action type information of the specified action.

5. The method according to claim 1, wherein the processing (S220) the requirement information using a first large model to obtain a target script comprises:
processing the requirement information using a large language model to obtain a script outline for the target video, wherein the first large model comprises the large language model;
performing a knowledge retrieval based on the script outline to obtain a script material for the target speech segment text, wherein the script material indicates knowledge matching a requirement intent represented by the requirement information; and
processing the script material using the large language model to obtain the target script.

6. The method according to claim 5, wherein the performing a knowledge retrieval based on the script outline to obtain a script material for the target speech segment text comprises:
processing the script outline using the large language model to obtain a query information;
performing a knowledge retrieval based on the query information to obtain the script material,
optionally, the performing a knowledge retrieval based on the query information to obtain the script material comprises:
performing a knowledge retrieval based on the query information to obtain an initial script material;
performing a semantic relevance detection between the initial script material and a predetermined requirement condition to obtain a defect detection result indicating that the initial script material fails to meet the predetermined requirement condition;
processing the defect detection result and the script outline using the large language model to obtain an updated query information; and
performing a knowledge retrieval based on the updated query information to obtain the script material.

7. The method according to claim 5, wherein the processing the script material using the large language model to obtain the target script comprises:
processing the script material using the large language model to obtain a first target speech segment text;
processing the script material and the first target speech segment text using the large language model to obtain a second target speech segment text; and
determining the target script based on the first target speech segment text and the second target speech segment text,
optionally, the requirement information further comprises at least one of: an object role attribute information of the target object, a target product information for the target video, or a target virtual prop information for the target video.

8. The method according to claim 1, wherein the target script comprises a plurality of target speech segment texts arranged in sequence; and
wherein the processing (S230) the target script and the action video segment using a second large model comprises:
processing two associated action video segments among a plurality of action video segments using a vision large model to obtain a transition action video segment, wherein the transition action video segment indicates a transition action between two different specified actions represented by the two associated action video segments, the two associated action video segments are determined based on arrangement positions of the plurality of target speech segment texts in the target script, and the second large model comprises the vision large model; and
processing the target script, the associated action video segments, and the transition action video segment using the vision large model to obtain the target video,
optionally, the processing the target script, the associated action video segments, and the transition action video segment using the vision large model to obtain the target video comprises:
processing an object attribute information in the target speech segment text, the associated action video segments, and the transition action video segment using the vision large model to obtain an intermediate video; and
driving lip movements of the target object in the intermediate video based on speech audio data determined from the target speech segment text to obtain the target video.

9. The method according to claim 1, wherein the target video is determined by driving lip movements of the target object based on predetermined speech audio data; and
wherein the speech audio data is determined by:
processing the target script using the first large model to obtain a prosodic feature, wherein the prosodic feature represents speech prosody of text sentences in the target script; and
performing a speech synthesis on the target script based on the prosodic feature to obtain the speech audio data,
optionally, wherein the performing a speech synthesis on the target script based on the prosodic feature to obtain the speech audio data comprises:
performing a speech synthesis on a text sentence in the target script based on the prosodic feature to obtain sentence-level audio data; and
updating an audio timing attribute of character-level audio sub-data in the sentence-level audio data based on a character-level timing attribute of a text character in the target script to obtain the speech audio data.

10. The method according to claim 1, further comprising:
in response to a target interaction instruction, processing a dynamic video requirement information for the target interaction instruction using a large language model to obtain a dynamic video segment script;
performing a video segment generation based on the dynamic video segment script to obtain a dynamic video segment; and
inserting the dynamic video segment into the target video,
optionally, the in response to a target interaction instruction, processing a dynamic video requirement information for the target interaction instruction using a large language model to obtain a dynamic video segment script comprises:
in response to the target interaction instruction, performing a dynamic video task decision process based on the target interaction instruction to obtain a task decision result, wherein the task decision result comprises a task type associated with the dynamic video segment and an insertion position information of the dynamic video segment in the target video; and
processing the task type and a context script content using the large language model to obtain the dynamic video segment script, wherein the context script content is determined from the target script based on the insertion position information.

11. The method according to claim 1 or 2, wherein the action video segment is determined by:
performing a position change detection on a key point of the target object in an initial video (301) to obtain a position change detection result;
determining an initial action video segment from the initial video (301) based on the position change detection result;
performing an action type detection on the initial action video segment to obtain an action type for the initial action video segment; and
determining an initial action video segment matching a predetermined action type as the action video segment.

12. An artificial intelligence agent (1100), comprising:
an input module (1110) configured to receive an input information;
a processing module (1120) configured to determine a target task based on the input information received by the input module, determine a first large model and a second large model based on the target task, and perform the method according to any one of claims 1 to 11 by invoking the first large model and the second large model, so as to obtain an output information; and
an output module (1130) configured to output the output information obtained by the processing module.

13. An electronic device (1200), comprising:
at least one processor; and
a memory communicatively connected to the at least one processor, wherein the memory stores instructions executable by the at least one processor, and the instructions are configured to, when executed by the at least one processor, cause the at least one processor to implement the method according to any one of claims 1 to 11.

14. A non-transitory computer-readable storage medium having computer instructions therein, wherein the computer instructions are configured to cause a computer to implement the method according to any one of claims 1 to 11.

15. A computer program product containing a computer program, wherein the computer program is configured to, when executed by a processor, cause the processor to implement the method according to any one of claims 1 to 11.
